# FASCICULE DE BREVET EUROPEEN

(11) **EP 3 971 610 B1**
(45) Date de publication et mention de la délivrance du brevet: **14.08.2024**
(21) Numéro de dépôt: 21315164.0
(22) Date de dépôt: 18.09.2021
(51) Int. Cl.: G01S 13/56, G08B 13/24, G01S 7/10, G01S 7/00

(54) **ALARME AUTOMOBILE**
ALARM FÜR KRAFTFAHRZEUG
ALARM FOR MOTOR VEHICLE

(30) Priorité: 21.09.2020 FR 2009528
(43) Date de publication de la demande: 23.03.2022
(73) Titulaire: Bouhra, Jalal, 49300 Cholet (FR)
(72) Inventeur: Bouhra, Jalal, 49300 Cholet (FR)

(56) Documents cités:
- US-A- 4 987 402
- US-A- 5 493 269
- US-A- 6 100 792
- US-A1- 2013 295 912

## Description

### 1. DOMAINE DE L'INVENTION

L'invention concerne un dispositif radar hyper fréquence permettant la détection d'une personne humaine ou d'un objet non identifié autour d'un véhicule.

### 2. ARRIÈRE-PLAN TECHNOLOGIQUE

De nos jours, la sécurité des biens pose de nombreux problèmes. Les habitations sont équipées de radars hyperfréquences ou de détecteurs infrarouges qui détectent l'arrivée de personnes non autorisées et qui déclenchent alors l'émission d'un message d'alarme sur un réseau et/ou l'activation d'une sirène ou d'un signal sonore puissant. Ces dispositifs ont pour but d'avertir de façon sonore le propriétaire ou le locataire d'une intrusion de façon que ce dernier soit intervienne soit avertisse les autorités. Il est connu des dispositifs radar hyper fréquence ou dispositif de même nature permettant la détection d'une personne humaine ou d'un objet non identifié autour d'un véhicule (automobile, camping-car, etc ...).

Le brevet US 6 100 792 déposé par ALPINE Electronics et publié le 8 Aout 2000 décrit un appareil de sécurité de voiture pour décourager le vol. L'appareil communique avec une télécommande par une liaison radio bidirectionnelle et lui transmet des informations sur des capteurs à des fins d'affichage.

La demande de brevet US 2013/295912 déposée par INNOVA Electronics et publiée le 7 Nov. 2013 FR 2 657 372 décrit un dispositif de sécurité embarqué dans un véhicule. Le dispositif comporte des caméras émettant un flux vidéo à destinataire d'un téléphone portable, celui-ci affiche sur l'écran les images transmises.

Il existe donc un réel besoin d'un nouveau moyen permettant la détection d'une personne humaine ou d'un objet non identifié autour d'un véhicule.

### 3. OBJECTIFS DE L'INVENTION

La présente invention a donc pour but d'améliorer la sécurisation de l'automobile d'une personne.

### 4. PRESENTATION DE L'INVENTION

A cet effet, l'invention concerne un dispositif alarme destiné à équiper un véhicule et utilisant un radar hyper fréquence apte à détecter toute personne ou objet approchant dudit véhicule, ledit radar hyper fréquence étant destiné à être fixé à l'intérieur du véhicule. Le dispositif comporte en outre une télécommande qui reçoit par radio en provenance du radar hyper fréquence une information sur une intrusion ayant lieu autour de l'automobile, ladite télécommande affichant une distinction graphique sur un schéma représentatif du véhicule, pour représenter la zone géographique telle que : à l'avant droite, à l'arrière droite, à l'avant gauche et l'arrière gauche du véhicule, où la personne ou l'objet est détecté autour du véhicule, le radar comportant six capteurs à effet Doppler dont les axes d'émissions sont orientés de 60° les uns les autres horizontalement autour d'un axe vertical, chaque secteur angulaire ainsi couvert définissant une zone de détection.

De cette manière, en plaçant le radar dans le véhicule celui-ci est protégé par l'habitacle et comporte moins de risque d'être désactivé par un intrus.

### 5.DESCRIPTION DES FIGURES

D'autres caractéristiques et avantages de l'invention apparaîtront à la lecture de la description suivante, donnée à titre d'exemple indicatif et non limitatif, et des dessins annexés, dans lesquels :
- [Fig 1] : la figure 1 décrit un schéma d'un radar hyperfréquence destiné à être monté dans un véhicule, selon un exemple de réalisation;
- [Fig 2] : la figure 2 décrit un schéma d'une télécommande communiquant avec un radar hyperfréquence, selon un exemple de réalisation;
- [Fig 3] : la figure 3 présente un schéma montrant une automobile doté d'un radar et une télécommande pour communiquer avec lui.
- [Fig 4] : la figure 4 décrit un schéma synoptique du système de détection équippé d'un radar hyperfréquence.

### 6.DESCRIPTION DETAILLEE D'UN MODE DE REALISATION

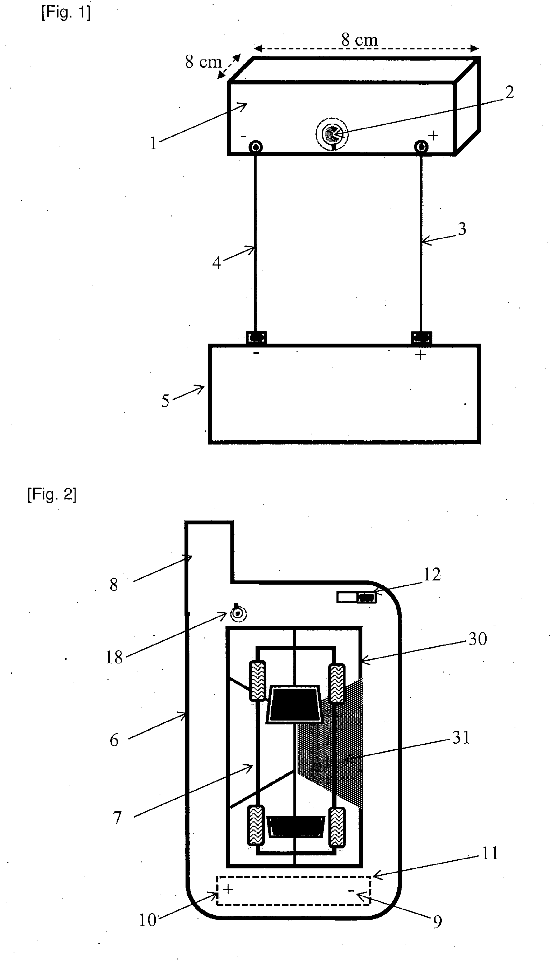

La **Fig. 1** représente un schéma d'un radar hyper fréquence alimenté par une batterie de 12 volts, selon un exemple préféré de réalisation. Un tel radar est destiné à être monté dans tout type de véhicule tel qu'une automobile, un camping-car, etc. Dans le cas d'un véhicule plus puissant, la tension de la batterie est plus élevée, 24 volts par exemple. En se référant à la **Fig. 1****,** le boîtier du radar hyper fréquence 1 a pour dimension huit centimètres sur huit centimètres. Dans la même figure, on retrouve la batterie 5 d'une tension de douze volts qui alimente le radar hyper fréquence par l'intermédiaire de deux câbles électriques à polarité plus 3 et moins 4. Le boîtier radar hyper fréquence 1 est muni d'un bouton rotatif 2 de réglage de la sensibilité et d'intensité de la détection. Le boîtier du radar hyper fréquence est placé et fixé à l'intérieur du véhicule.

Les dimensions du boîtier radar hyper fréquence sont par exemple de 8 centimètres en largeur sur 8 centimètres en longueur, et de 4 centimètres en hauteur. Ces dimensions ne sont données qu'à titre indicatif et peuvent variées selon les modèles. Le boîtier radar est installé dans la surface à protéger (automobile, camping-car, etc...) et communique par liaison hertzienne avec une télécommande portative qui peut très bien accompagnée un trousseau de clefs. Cette télécommande permet de recevoir des alertes lorsqu'une personne ou un objet approche dudit radar hyper fréquence. Ces dispositifs (radar hyper fréquence ainsi que sa télécommande) offrent les mêmes garanties de sécurité qu'une caméra de détection sauf que les dispositifs en question fonctionnent en toute indépendance et rendent donc leurs fonctionnalités plus sûres et plus fiables que les alarmes pour automobile qui existent sur le marché mondial. Le dispositif est donc constitué d'un boîtier radar hyper fréquence sans caméra et son rôle est de détecter et de transmettre l'alerte spontanément à la télécommande portative synchronisée avec celui-ci.

Le boitier radar 1 est avantageusement placé à la hauteur des vitres du véhicule, de cette manière les ondes hyperfréquences émises par le radar peuvent plus facilement sortir du véhicule et détecter la présence d'objets mobiles. Une position est par exemple entre les deux repose-têtes des passagers avant. Le radar peut être solidarisé au véhicule à l'aide d'un support fixé au sol, ou à l'aide d'un élément fixé au plafond. La position centrale à l'intérieur du véhicule est privilégiée pour couvrir uniformément l'environnement et être plus difficilement préhensible si par mégarde, une fenêtre est ouverte.

La **Fig. 2** représente un schéma d'une télécommande 6 destinée à entrer en communication avec le radar 1, selon un exemple préféré de réalisation. La télécommande 6 dispose d'un écran pour un affichage digital affichant en permanence un schéma représentatif d'une automobile et reçoit à distance les informations concernant d'éventuelles détections émises par le radar hyper fréquence 1. La télécommande comporte un compartiment servant à accueillir une pile de 1,5 volts, de type LR003 par exemple, pour son alimentation et notamment pour l'affichage digital permanent, le compartiment dispose de moyens pour distinguer les polarités plus 10 et moins 9 desdites piles. Un schéma représentatif d'une automobile 7 est affiché en permanence sur l'écran. La télécommande dispose également d'un bouton « on / off » 12 permettant d'activer ou de désactiver à distance le radar hyper fréquence 1. Selon un exemple particulier de réalisation, pour activer ou désactiver la fonction détection, il suffit de le faire à distance depuis la télécommande portative en appuyant enfoncé sur le bouton « on / off » de manière prolongée pendant 5 secondes.

La télécommande 6 reçoit par radio en provenance du radar hyper fréquence 1 une information représentative d'une intrusion ayant lieu autour de l'automobile contenant le boîtier radar 1. L'écran de la télécommande affiche un point noir clignotant en permanence sur un schéma représentatif d'une automobile, pour représenter la zone géographique exacte où se situe l'intrusion autour de l'automobile.

La liaison entre le radar 1 et la télécommande 6 est avantageusement chiffrée et sécurisée. Ces deux équipements se partagent une même clef secrète servant à chiffrer l'information lors de l'émission et à s'assurer de l'authenticité de cette information lors de la réception. L'étape d'appairage consiste à allumer concomitamment les deux équipements et à appuyer longuement sur un bouton de la télécommande, un code d'appairage est alors émis par radio et capté par le radar 1. Ce dernier répond en demandant l'émission de la clef secrète qui est ainsi transmise par la télécommande.

La liaison radio est bidirectionnelle, la télécommande émettant un ordre d'activation et le radar émettant une information de détection. La fréquence utilisée par le circuit BLE est avantageusement de 2450 Mhz ou de 868 Mhz. Selon un perfectionnement, une même télécommande peut être utilisée avec plusieurs radars 1 installés dans des véhicules différents. Dans ce cas, la télécommande dispose d'un sélecteur pour contrôler indépendamment chaque radar. Ce dernier possède un identifiant (par exemple un chiffre, ou un numéro d'immatriculation, ou le modèle du véhicule), qui est transmis par radio dans le cas d'une détection d'un objet autour du véhicule. Cet identifiant est élaboré sur l'écran de la télécommande lors de l'étape d'appairage, en utilisant par exemple un clavier tactile, et transmis au radar correspondant lors de la transmission de la clef secrète. Lorsqu'un message est émis par un des radars 1, pour quelques raisons que ce soit, ce message contient l'identifiant du véhicule à des fins d'affichage sur un écran de la télécommande.

La télécommande portative 6 est dotée d'une petite antenne 8 d'un centimètre de long permettant de recevoir les alertes (ou les informations) collectées en direct et émises en direct par le boîtier radar hyper fréquence. Selon un exemple de réalisation, la télécommande dispose d'un écran à affichage digital (de technologie cristaux liquides ou à LED). Lors de l'activation de la télécommande, l'écran de cette dernière affiche alors de manière permanente le schéma représentatif d'une automobile. L'antenne de la télécommande lui permet de recevoir à distance et par radio, en direct et en temps réel, les alertes de détections émises par le radar hyper fréquence lorsqu'une intrusion a eu lieu autour de l'automobile. La télécommande 6 possède une portée radio de l'ordre de cent mètres entre elle-même et le boîtier radar 1 hyper fréquence. De cette façon, l'utilisateur emporte avec soi sa télécommande, peu importe l'endroit où l'on se trouve par rapport au radar hyper fréquence (chez soi, en milieu ouvert ou fermé, etc...).

Les informations collectées font avantageusement l'objet d'une alerte apparaissant sur l'écran de la télécommande par des sonneries ou vibrations. Selon le mode voulu par l'utilisateur, lorsque le radar hyper fréquence détecte l'approche d'une personne ou d'un objet, il transmet spontanément l'information à ladite télécommande. La télécommande reçoit les alertes émises par le radar hyper fréquence de façon efficace et précise sur la zone géographique protégée. De cette manière, la télécommande indique avec précision la position exacte de la personne ou de l'objet qui s'est approché de ladite automobile et qui est détecté par le radar, par exemple : à l'avant droite, à l'arrière droite, à l'avant gauche et l'arrière gauche de l'automobile.

Selon une variante de réalisation, la télécommande dispose d'un bouton de réglage 18 permet de régler à distance la sensibilité et l'intensité de détection. De cette manière, en quittant son véhicule, l'utilisateur régle la sensibilité en fonction de l'endroit où il est garé. Cette sensibilité n'est que de quelques mètres si le véhicule est dans un parking, ou elle est maximale si le véhicule est en rase campagne. Selon une variante de réalisation, le réglage de sensibilité s'effectue au niveau de la télécommande, lors de l'activation à distance du radar, ou plus tard pendant que le radar est activé.

L'exemple de réalisation présentée à la **Fig. 2** montre une apparence d'écran affichant un cadre 30 autour du véhicule, ce cadre est divisé en 6 secteurs angulaires représentant les six zones de détection du radar hyper fréquence. Lorsque la télécommande reçoit d'un radar une information de détection de présence autour du véhicule, elle allume le secteur angulaire correspondant à la zone. Dans l'exemple de la **Fig. 2****,** une présence est détectée sur le côté droit du véhicule et le secteur droit 31 apparaît avec une distinction visuelle, par exemple en clignotant ou en affichant une couleur rouge.

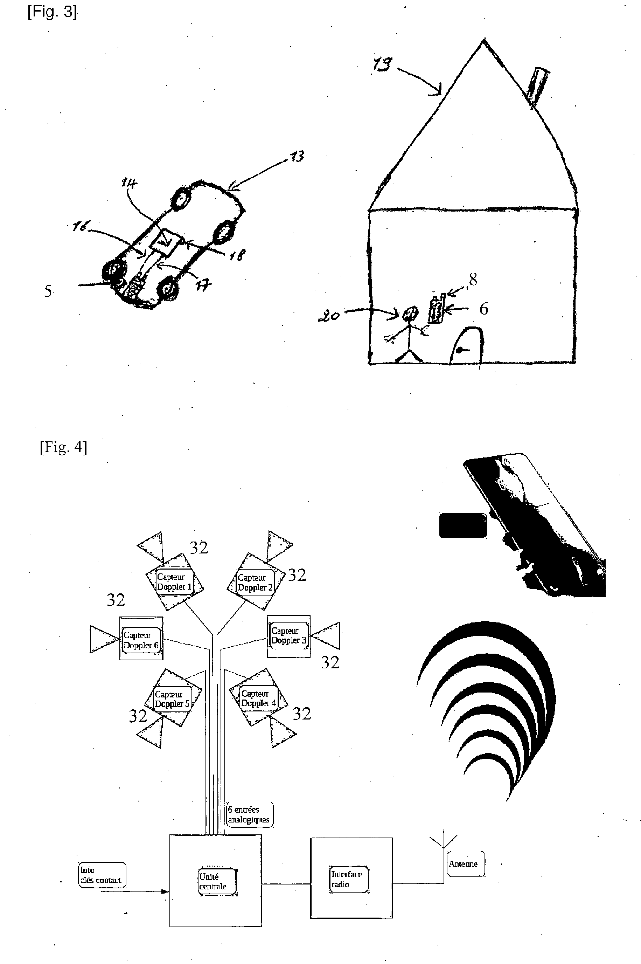

La **Fig. 3** représente une automobile avec le boîtier radar hyper fréquence 1 placé à l'intérieur de celle-ci. Le schéma d'une maison ainsi qu'une personne 20 se trouvant à l'intérieur de sa maison, est également visible à droite de l'automobile, cette personne étant la propriétaire de l'automobile ou son utilisateur. Ladite personne est représentée en tenant à la main ladite télécommande portative 6. On remarque la présence de l'antenne 8 de ladite télécommande. La télécommande dispose d'un bouton 12 permettant d'activer ou de désactiver à distance ledit boîtier radar hyper fréquence. L'écran à affichage digital de la télécommande, affiche en permanence un schéma 7 représentatif d'une automobile comme indiqué sur la **Fig. 2****.**

Comme il a été décrit précédemment, le boîtier radar hyper fréquence 1 est placé à l'intérieur de l'automobile 14 et relié à la batterie de 12 volts 5 par deux câbles électriques à polarités plus et moins 16, 17 servant à l'alimentation dudit boîtier radar hyper fréquence.

Lorsqu'une personne ou un objet s'approche de l'automobile selon le réglage d'un bouton rotatif de paramétrage placé sur le radar hyper fréquence, la télécommande se met alors en alerte par une sonnerie ou par des vibrations selon le mode voulu et indique la position exacte de la personne ou de l'objet détecté autour de l'automobile par un point clignotant en intermittence et en permanence sur l'affichage digital de ladite télécommande.

Lorsque le radar hyper fréquence est activé à distance depuis la télécommande qui est associée, ce dernier va déployer un champ d'ondes plus ou moins puissant défini par le réglage du bouton de réglage rotatif de la sensibilité de détection se situant soit sur le boîtier de radar hyper fréquence soit sur la télécommande. De cette manière, l'utilisateur peut régler la sensibilité du radar par rapport à l'environnement qui entoure son véhicule.

Par conséquent, la sécurité de l'automobile est optimale contre tout acte de malveillance (tel que : le vol ou des écrous de roues dévissés volontairement par une tierce personne mal intentionnée).

Selon un perfectionnement, lorsque le radar est activé à distance, il émet tout d'abord un signal sonore pendant une durée déterminée, une minute par exemple, de façon à avertir tout occupant du véhicule qu'à l'issue de ce temps, le radar devient actif. De cette manière, un éventuel occupant peut quitter le véhicule, évitant ainsi d'être perturbé par les ondes hyperfréquences et de déclencher le radar au moment où il se déplace pour quitter le véhicule. Selon un perfectionnement, le radar 1 dispose d'un bouton pour stopper la durée déterminée et pour ne pas émettre les ondes hyperfréquences à l'issue de la durée au cours de laquelle le signal sonore est émis. De cette manière, si l'occupant ne veut pas quitter le véhicule pour quelques raisons que ce soit, il peut quand même stopper l'activation du radar. Si l'occupant appuie sur ce bouton, alors le radar émet une information indiquant qu'il est désactivé par une manoeuvre à l'intérieur du véhicule. De cette manière, l'utilisateur de la télécommande est informé de cela et peut, soit rechercher la personne occupante, la faire sortir et activer le radar, soit considérer que le véhicule est occupé et qu'il n'a pas besoin d'une surveillance supplémentaire.

La **Fig. 4** décrit un schéma synoptique d'un circuit équipant un radar hyperfréquence. Le radar est équipé de six capteurs à effet Doppler 32 dont les axes d'émissions sont orientés de 60° les uns les autres horizontalement autour d'un axe vertical. Chaque secteur angulaire ainsi couvert définit une zone de détection. Le capteur Doppler émet des ondes hyper fréquences qui sont réfléchies par les obstacles. Si l'obstacle est en mouvement, l'onde de retour est légèrement modifiée (la fréquence augmente ou diminue de quelques pourcents selon que l'obstacle s'éloigne ou se rapproche). Les informations de chaque capteur sont transmises à une unité centrale qui analyse les informations et dans le cas d'une détection, transmet au module radio cette information. Le message radio est émis par une antenne qui peut avantageusement être la même que celle équipant le véhicule.

## Revendications

1. Dispositif alarme destiné à équiper un véhicule (14) et utilisant un radar hyper fréquence (1) apte à détecter toute personne ou objet approchant dudit véhicule, ledit radar hyper fréquence étant destiné à être fixé à l'intérieur du véhicule, **caractérisé en ce qu'**il comporte en outre une télécommande (6) qui reçoit par radio en provenance du radar hyper fréquence une information sur une intrusion ayant lieu autour de l'automobile, ladite télécommande affichant une distinction graphique sur un schéma représentatif du véhicule, pour représenter la zone géographique telle que : à l'avant droite, à l'arrière droite, à l'avant gauche et l'arrière gauche du véhicule, où la personne ou l'objet est détecté autour du véhicule, ledit dispositif alarme étant **caractérisé en ce que**: le radar (1) comporte six capteurs à effet Doppler (32) dont les axes d'émissions sont orientés de 60° les uns les autres horizontalement autour d'un axe vertical, chaque secteur angulaire ainsi couvert définissant une zone de détection.

2. Dispositif alarme selon la revendication 1 **caractérisé en ce que** ladite télécommande (6) affiche un point noir clignotant en permanence sur un schéma représentatif du véhicule, pour représenter la zone géographique où la personne ou l'objet est détecté autour du véhicule.

3. Dispositif alarme selon la revendication 1 ou 2 **caractérisé en ce que** la télécommande (6) est dotée d'une petite antenne d'un centimètre de long permettant de recevoir des messages informant d'une détection autour du véhicule collectés en direct et émises en direct par ledit radar hyper fréquence 1.

4. Dispositif alarme selon l'une quelconque des revendications précédentes **caractérisé en ce que** la télécommande comporte un affichage digital ou à LED, lorsque celle-ci est activée, l'écran de cette dernière affiche alors de manière permanente le schéma représentatif d'une automobile, l'antenne de cette dernière lui permet de recevoir à distance, en direct et en temps réel les alertes de détections émises par le radar hyper fréquence lorsqu'une intrusion a eu lieu autour de l'automobile, la télécommande a une portée de l'ordre de cent mètres entre elle-même et ledit boîtier radar hyper fréquence, les informations collectées font l'objet systématiquement d'une alerte apparaissant sur l'écran de la télécommande par des sonneries ou vibrations selon le mode voulu, lorsque le radar hyper fréquence détecte l'approche d'une personne ou d'un objet, il transmet spontanément l'information à ladite télécommande.

5. Dispositif alarme selon l'une quelconque des revendications précédentes, **caractérisé en ce que** le radar (1) dispose d'un bouton (2) de réglage de la sensibilité.

6. Dispositif alarme selon la revendication 1 à 4, **caractérisé en ce que** ladite télécommande (6) dispose d'un bouton de réglage de la sensibilité du radar (1), la valeur de sensibilité est transmise au radar par radio.

7. Dispositif alarme selon l'une quelconque des revendications précédentes, **caractérisé en ce que** le radar (1) est fixé dans le véhicule à la hauteur des vitres, de façon que les ondes hyperfréquences puissent plus facilement être émises à l'extérieur.

8. Dispositif alarme selon la revendication 6, **caractérisé en ce que** le radar est fixé au plafond du véhicule.

9. Dispositif alarme selon l'une quelconque des revendications précédentes, **caractérisé en ce que** la liaison radio entre la télécommande (6) et le radar est chiffrée par une clef transmise lors d'une étape d'appairage.

10. Dispositif alarme selon l'une quelconque des revendications précédentes, **caractérisé en ce que** la liaison radio s'effectue sur la bande de fréquence de 2450 Mhz ou 868 MHz.

11. Dispositif alarme selon l'une quelconque des revendications précédentes, **caractérisé en ce qu'**il comporte une pluralité de radars (1) disposés chacun dans un véhicule doté d'un identifiant, chaque message émis par un radar comporte ledit identifiant qui est affiché par ladite télécommande (6) lors de la réception d'un message de détection d'une personne ou d'un objet autour du véhicule, ledit identifiant est introduit au niveau de la télécommande lors de l'étape d'appairage et transmis au radar qui l'enregistre en mémoire.

12. Dispositif alarme selon l'une quelconque des revendications précédentes, **caractérisé en ce que** le radar (1) dispose d'un moyen pour émettre un signal sonore pendant une durée déterminée dès la réception d'une commande d'activation, le radar étant activé à l'issue de la durée déterminée.

13. Dispositif alarme selon la revendication 12, **caractérisé en ce que** le radar (1) dispose d'un bouton pour stopper la durée déterminée et inhiber le fonctionnement du radar, l'appui sur ledit bouton déclenchant l'émission vers la télécommande (6) d'un message qui informe que le radar ne sera pas activé.

## Patentansprüche

1. Alarmvorrichtung, die dazu bestimmt ist, ein Fahrzeug (14) auszurüsten, und die ein Mikrowellenradar (1) verwendet, das in der Lage ist, jede sich dem Fahrzeug nähernde Person oder jedes sich nähernde Objekt zu erfassen, wobei das Mikrowellenradar dazu bestimmt ist, im Inneren des Fahrzeugs befestigt zu werden, **dadurch gekennzeichnet, dass** sie außerdem eine Fernbedienung (6) umfasst, die über Funk von dem Mikrowellenradar Informationen über ein um das Fahrzeug herum stattfindendes Eindringen empfängt, wobei die Fernbedienung eine grafische Unterscheidung auf einem für das Fahrzeug repräsentativen Diagramm anzeigt, um den geografischen Bereich wie: vorne rechts, hinten rechts, vorne links und hinten links des Fahrzeugs, wo die Person oder der Gegenstand um das Fahrzeug herum erfasst wird, wobei die Alarmvorrichtung **dadurch gekennzeichnet ist, dass** das Radar (1) sechs Doppler-Effekt-Sensoren (32) umfasst, deren Emissionsachsen um 60° zueinander horizontal um eine vertikale Achse ausgerichtet sind, wobei jeder so erfasste Winkelsektor einen Erfassungsbereich definiert.

2. Alarmvorrichtung nach Anspruch 1, **dadurch gekennzeichnet, dass** die Fernbedienung (6) auf einem für das Fahrzeug repräsentativen Diagramm einen ständig blinkenden schwarzen Punkt anzeigt, um den geografischen Bereich darzustellen, in dem die Person oder das Objekt um das Fahrzeug herum erfasst wird.

3. Alarmvorrichtung nach Anspruch 1 oder 2, **dadurch gekennzeichnet, dass** die Fernbedienung (6) mit einer kleinen Antenne von einem Zentimeter Länge ausgestattet ist, um Nachrichten zu empfangen, die über eine Erfassung in der Umgebung des Fahrzeugs informieren und von dem Hyperfrequenzradar (1) live erfasst und gesendet werden.

4. Alarmvorrichtung nach einem der vorhergehenden Ansprüche, **dadurch gekennzeichnet, dass** die Fernbedienung eine Digital- oder LED-Anzeige umfasst, deren Bildschirm, wenn sie aktiviert ist, permanent das repräsentative Diagramm eines Fahrzeugs anzeigt, wobei die Antenne der Fernbedienung es ermöglicht, aus der Ferne, live und in Echtzeit die Erkennungsmeldungen zu empfangen, die vom Mikrowellenradar ausgesendet werden, wenn ein Eindringen in die Umgebung des Fahrzeugs stattgefunden hat, die Fernbedienung verfügt über einen Bereich, in dem die gesammelten Informationen systematisch Gegenstand eines Alarms sind, der je nach gewünschtem Modus durch Glocken oder Vibrationen auf dem Bildschirm der Fernbedienung erscheint; wenn das Mikrowellenradar die Annäherung einer Person oder eines Objekts feststellt, überträgt es spontan die Informationen an die besagte Fernbedienung.

5. Alarmvorrichtung nach einem der vorhergehenden Ansprüche, **dadurch gekennzeichnet, dass** das Radargerät (1) einen Drehknopf (2) zur Einstellung der Empfindlichkeit aufweist.

6. Alarmvorrichtung nach einem der Ansprüche 1 bis 4, **dadurch gekennzeichnet, dass** die Fernbedienung (6) einen Drehknopf (1) zur Einstellung der Radarempfindlichkeit aufweist, wobei der Empfindlichkeitswert per Funk an das Radargerät übertragen wird.

7. Alarmvorrichtung nach einem der vorhergehenden Ansprüche, **dadurch gekennzeichnet, dass** das Radargerät (1) im Fahrzeug in Höhe der Fenster befestigt ist, so dass die Mikrowellen leichter nach außen abgestrahlt werden können.

8. Alarmvorrichtung nach Anspruch 6, **dadurch gekennzeichnet, dass** das Radargerät an der Decke des Fahrzeugs befestigt ist.

9. Alarmanlage nach einem der vorhergehenden Ansprüche, **dadurch gekennzeichnet, dass** die Funkverbindung zwischen der Fernbedienung (6) und dem Radargerät durch einen Schlüssel verschlüsselt ist, der während eines Kopplungsschritts übertragen wird.

10. Alarmanlage nach einem der vorhergehenden Ansprüche, **dadurch gekennzeichnet, dass** die Funkverbindung auf dem Frequenzband von 2450 MHz oder 868 MHz hergestellt wird.

11. Alarmvorrichtung nach einem der vorhergehenden Ansprüche, **dadurch gekennzeichnet, dass** sie eine Vielzahl von Radargeräten (1) umfasst, die jeweils in einem Fahrzeug angeordnet sind und mit einer Kennung verbunden sind, wobei jede von einem Radargerät ausgesendete Nachricht die genannte Kennung umfasst, die von der genannten Fernbedienung (6) angezeigt wird, wenn sie eine Nachricht über die Erfassung einer Person oder eines Objekts in der Nähe des Fahrzeugs empfängt, wobei die genannte Kennung während der Kopplungsphase auf der Ebene der Fernbedienung eingegeben und an das Radargerät übertragen wird, das sie in einem Speicher aufzeichnet.

12. Alarmvorrichtung nach einem der vorhergehenden Ansprüche, **dadurch gekennzeichnet, dass** das Radargerät (1) ein Mittel zur Abgabe eines akustischen Signals für eine bestimmte Zeitspanne nach Empfang eines Aktivierungsbefehls aufweist, wobei das Radargerät am Ende der bestimmten Zeit aktiviert wird.

13. Alarmvorrichtung nach Anspruch 12, **dadurch gekennzeichnet, dass** das Radargerät (1) eine Taste zum Anhalten der bestimmten Zeit und zum Sperren des Betriebs des Radargeräts aufweist, wobei das Drücken der Taste die Übertragung einer Nachricht an die Fernbedienung (6) auslöst, die darüber informiert, dass das Radargerät nicht aktiviert wird.

## Claims

1. An alarm device intended to equip a vehicle (14) and using a microwave radar (1) capable of detecting any person or object approaching said vehicle, said microwave radar being intended to be fixed inside the vehicle, **characterized in that** it also comprises a remote control (6) which receives by radio from the microwave radar information on an intrusion taking place around the vehicle, said remote control displaying a graphic distinction on a diagram representative of the vehicle, to represent the geographical area such as: at the front right, rear right, front left and rear left of the vehicle, where the person or object is detected around the vehicle, said alarm device being **characterized in that** the radar (1) comprises six Doppler effect sensors (32) whose emission axes are oriented 60° to each other horizontally around a vertical axis, each angular sector thus covered defining a detection zone.

2. An alarm device according to claim 1 **characterized in that** said remote control (6) displays a permanently flashing black dot on a diagram representative of the vehicle, to represent the geographical area where the person or object is detected around the vehicle.

3. An alarm device according to claim 1 or 2, **characterized in that** the remote control (6) is equipped with a small antenna one centimeter long for receiving messages informing of a detection around the vehicle, collected live and emitted live by said hyper frequency radar (1).

4. Alarm device according to any one of the previous claims **characterized in that** the remote control comprises a digital or LED display, when it is activated, the screen of the latter then permanently displays the representative diagram of a car, the antenna of the latter allows it to receive remotely, live and in real time the detection alerts emitted by the microwave radar when an intrusion has taken place around the car, the remote control has a range of the information collected is systematically the subject of an alert appearing on the screen of the remote control by bells or vibrations depending on the desired mode, when the microwave radar detects the approach of a person or an object, it spontaneously transmits the information to the said remote control.

5. An alarm device according to any one of the previous claims, **characterized in that** the radar (1) has a knob (2) for adjusting the sensitivity.

6. An alarm device according to claim 1 to 4, **characterized in that** said remote control (6) has a radar sensitivity adjustment knob (1), the sensitivity value is transmitted to the radar by radio.

7. An alarm device according to any one of the previous claims, **characterized in that** the radar (1) is fixed in the vehicle at the height of the windows, so that microwave waves can be more easily emitted outside.

8. An alarm device according to claim 6, **characterized in that** the radar is fixed to the ceiling of the vehicle.

9. An alarm device according to any one of the previous claims, **characterized in that** the radio link between the remote control (6) and the radar is encrypted by a key transmitted during a pairing step.

10. An alarm device according to any one of the previous claims, **characterized in that** the radio link is made on the frequency band of 2450 MHz or 868 MHz.

11. An alarm device according to any one of the previous claims, **characterized in that** it comprises a plurality of radars (1) each arranged in a vehicle associated with an identifier, each message emitted by a radar comprises said identifier which is displayed by said remote control (6) when receiving a message of detecting a person or object around the vehicle, the said identifier is introduced at the level of the remote control during the pairing stage and transmitted to the radar which records it in memory.

12. An alarm device according to any one of the previous claims, **characterized in that** the radar (1) has a means of emitting an audible signal for **characterized in that** the radar (1) has a means of emitting an audible signal for a specified period of time upon receipt of an activation command, the radar being activated at the end of the determined time.

13. An alarm device according to claim 12, **characterized in that** the radar (1) has a button for stopping the specified time and inhibiting the operation of the radar, pressing of said button triggering the transmission to the remote control (6) of a message informing that the radar will not be activated.
